# FASCICULE DE BREVET EUROPEEN

(11) **EP 3 447 590 B1**
(45) Date de publication et mention de la délivrance du brevet: **22.07.2020**
(21) Numéro de dépôt: 17187011.6
(22) Date de dépôt: 21.08.2017
(51) Int. Cl.: G04B 19/10, G04B 19/22, G04B 39/00

(54) **DISPOSITIF D'AFFICHAGE HOLOGRAPHIQUE**
HOLOGRAPHISCHE ANZEIGE
HOLOGRAPHIC DISPLAY DEVICE

(43) Date de publication de la demande: 27.02.2019
(73) Titulaire: The Swatch Group Research and Development Ltd, 2074 Marin (CH)
(72) Inventeur: TORTORA, Pierpasquale, 2000 Neuchâtel (CH)
(74) Mandataire: ICB SA

(56) Documents cités:
- EP-A1- 0 440 824
- EP-A1- 2 950 167
- EP-A1- 2 950 168
- WO-A1-86/05269
- WO-A1-99/44082
- JP-A- H06 289 169

## Description

### Domaine technique

La présente invention se rapporte à dispositif d'affichage lumineux pour montre ou horloge.

### Arrière-plan technologique

Le secteur de l'horlogerie a toujours recherché à améliorer l'affichage des montres et horloges, en particulier dans des environnements sombres ou dans l'obscurité. Il s'agit par exemple de repères phosphorescents pour un affichage nocturne ou d'un éclairage interne déclenché à la demande, permettant d'éclairer les index horaires et les aiguilles. Par ailleurs, des dispositifs d'affichages originaux ont aussi permis aux entreprises horlogères de se différencier par rapport à leurs concurrents.

A titre d'exemple, les documents EP 2 950 167 et EP 2 950 166 proposent un éclairage via des sources lumineuses directement disposées sur ou à l'intérieur des aiguilles. Dans ce document, les sources sont soit directement disposées à l'extrémité périphérique des aiguilles, soit disposées à proximité de l'axe de rotation. Dans ce dernier cas, l'aiguille comprend un guide d'onde permettant de conduire la lumière le long de celle-ci.

Le document brevet WO 86/05269 quant à lui propose de remplacer les index horaires par des hologrammes reconstruits à partir d'une source externe de lumière. L'objectif principal de ce document est de supprimer l'erreur de lecture due à la parallaxe en plaçant le plan de l'image virtuelle reconstruite des index dans le même plan que les aiguilles.

### Résumé de l'invention

La présente invention concerne un dispositif d'affichage holographique intégré à un dispositif horloger comprenant au moins une aiguille mobile comprenant à son extrémité périphérique une source lumineuse et une glace comprenant à sa périphérie au moins un hologramme, ladite source lumineuse étant agencée sur l'aiguille de façon à éclairer par l'arrière ledit au moins un hologramme disposé sur une face de ladite glace de montre de façon à reconstruire ledit hologramme lorsqu'elle passe dans un secteur angulaire prédéterminé de la glace.

Avantageusement, une pluralité d'hologrammes sont disposés sur au moins une circonférences, les hologrammes étant reconstruits successivement lors du passage de l'aiguille dans le secteur angulaire correspondant. Cette pluralité d'hologrammes comprend par exemple les index horaires ou minutes d'une montre.

Lorsque le dispositif horloger comprend une première et une deuxième aiguille, une source lumineuse est avantageusement disposée sur chaque aiguille, et la pluralité d'hologrammes est disposée sur une première et une deuxième circonférence de façon à ce que les hologrammes disposés sur la première circonférence soient successivement reconstruits par l'éclairage de la première aiguille, et les hologrammes disposés sur la deuxième circonférence soient successivement reconstruits par l'éclairage de la deuxième aiguille.

Avantageusement, la glace du dispositif d'affichage comprend au moins un réseau diffractif, agencé à la surface interne de ladite glace de façon à diffracter la lumière selon un angle supérieur à l'angle critique de réflexion totale, au moins un hologramme étant disposé sur la glace de façon à être reconstruit par le faisceau diffracté, de préférence après une réflexion totale à la surface externe de la glace.

De préférence, le réseau diffractif est un réseau du type échelette (blazed grating) ou holographique.

Avantageusement, une pluralité de réseaux diffractifs sont disposés sur au moins une première circonférence et une pluralité d'hologrammes sont disposés sur une seconde circonférence, la source lumineuse à l'extrémité périphérique de l'aiguille étant disposée de façon à éclairer successivement, en utilisation, les réseaux diffractifs de la première circonférence, et la lumière diffractée reconstruisant successivement les hologrammes correspondants sur la seconde circonférence.

Dans ce dernier mode de réalisation, lorsqu'une seconde aiguille est présente, elle comprend aussi de préférence une seconde source lumineuse disposée de façon à éclairer successivement, en utilisation, une pluralité de réseaux diffractifs disposés sur une troisième circonférence, la lumière diffractée reconstruisant successivement une pluralité d'hologrammes disposés sur une quatrième circonférence.

Avantageusement, la ou les source(s) lumineuse(s) comprend(ennent) une source primaire sélectionnée parmi le groupe consitant en diode à émission lumineuse (DEL), diode laser, et diode laser à cavité verticale. Cette source primaire est de préférence une source lumineuse monochromatique.

Selon un mode de l'invention, les sources lumineuses des différentes aiguilles émettent selon des longueurs d'ondes différentes, de façon à distinguer les aiguilles dans un même secteur angulaire par leur couleurs plutôt que par la position de l'hologramme.

Selon un mode préféré de l'invention, la, ou les source(s) lumiseuse(s) comprend (ennent) un guide d'onde logé dans l'aiguille.

Avantageusement, l'hologramme et/ou le ou les réseau(x) diffractifs comprennent (voir, consiste en) un relief, gravé, estampé, gauffré ou moulé à la surface interne de la glace.

### Brève description des figures

- La figure 1 représente schématiquement un exemple de réalisation de l'invention ;
- La figure 2 représente un autre exemple de réalisation de l'invention, selon un mode simplifié ;
- La figure 3 représente une coupe d'un mode préféré de l'invention ;
- La figure 4 représente une vue de face d'une montre selon l'invention.

### Description détaillée de l'invention

La présente invention concerne un dispositif d'affichage holographique dynamique, utilisant le mouvement de sources lumineuses 3, 4 au bout des aiguilles d'une montre.

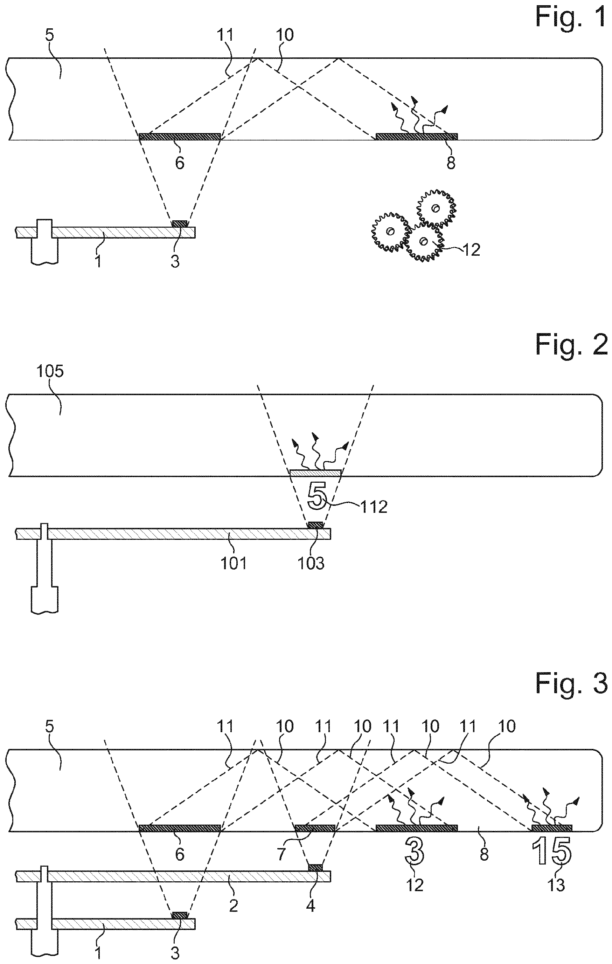

Dans son mode d'exécution le plus simple, tel que représenté à la figure 2, une source lumineuse 103 disposée au bout d'une aiguille 101 éclaire par l'arrière un hologramme 108 disposé sur une face d'une glace de montre 105. L'éclairage 103 est configuré (angle et longueur d'onde adéquate) de façon à reconstruire via l'hologramme 108 l'image virtuelle 112 de l'affichage désiré lorsque l'aiguille passe dans un secteur angulaire déterminé.

Avantageusement, une pluralité d'hologrammes est disposée sur une circonférence de façon à être reconstruits successivement lors du passage de l'aiguille sous chacun de ces hologrammes. Par exemple, chacun de ces hologrammes correspond à une heure de la journée.

De préférence, les hologrammes sont disposés sur deux circonférences, l'une disposée devant l'aiguille des heures, et l'autre devant l'aiguille de minutes, la première circonférence comprenant des hologrammes des index des heures, et la seconde circonférence comprenant les index des minutes.

Toute source de lumière adéquate pour reconstruire un hologramme peut être utilisée. Néanmoins, les sources les plus adaptées, tant du point de vue de leur miniaturisation que du point de vue de la nature de la lumière émise sont les LED (diodes électroluminescentes) et les VCSEL (diodes laser à cavité verticale émettant par la surface). Ces sources présentent en effet une cohérence spatiale et temporelle suffisante pour reconstruire un hologramme.

Avantageusement, le ou les hologrammes 8, 9, 108, 209 sont disposés sur la face interne de la glace de montre 5. Cette disposition permet en effet d'éviter la dégradation de l'hologramme par usure ou salissure lors des manipulations de la montre.

De préférence, les hologrammes sont obtenus par un relief à la surface du verre, ce qui permet l'utilisation d'outils de production de masse tel que l'emboutissage, le moulage, la gravure,...

Un inconvénient du mode de réalisation susmentionné est que, dans le cas d'une montre, la très faible distance entre l'aiguille 101 et la face interne de la glace de montre 105 est très faible, si bien que la zone éclairée par la source lumineuse est limitée, ce qui limite de facto la taille de l'hologramme perçu 112.

Pour remédier à cet inconvénient, le mode de réalisation préféré des figures 1, 3 et 4 a recourt à un éclairage indirect qui permet la reconstruction par un hologramme de taille plus grande.

Dans ce mode de réalisation, la source lumineuse de l'aiguille n'éclaire plus directement l'hologramme 8, 9, mais un réseau diffractif 6, 7, diffractant la lumière selon un angle prédéterminé. Avantageusement, cet angle de diffraction est supérieur à l'angle critique de réflexion totale, de telle façon que le faisceau diffracté 11 forme un faisceau réfléchi 10 qui, lui, éclaire les hologrammes 8 et 9. Cette géométrie présente de nombreux avantages, parmi lesquels le fait que l'hologramme reconstruit n'est pas superposé à la source lumineuse, ce qui évite un éblouissement direct. L'hologramme est alors aussi lu selon la technique associée à la géométrie d'holographie inventée par Y. Denisyuk, ce qui permet d'éviter la superposition d'une image réelle à une image virtuelle.

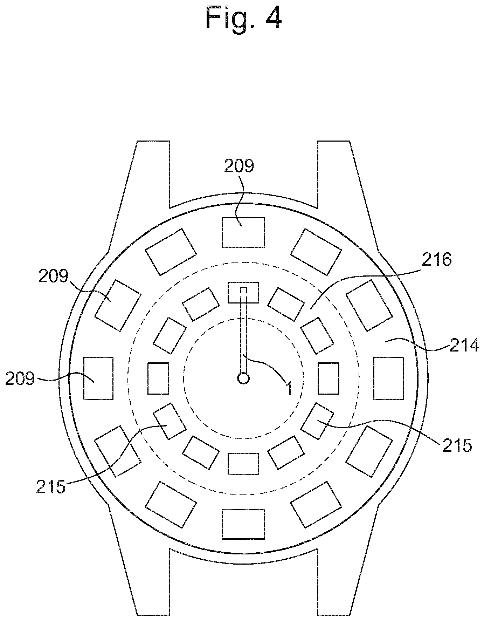

Tel que représenté à la figure 4, le dispositif de l'invention comprend de préférence une pluralité de réseaux diffractifs 215 disposés sur une première circonférence 216 diffractant la lumière émise par la source au bout de l'aiguille 1 vers les hologrammes 209 correspondants disposés sur une seconde circonférence 214.

La pluralité de réseaux diffractifs peut avantageusement être remplacée par un réseau diffractif circulaire formé d'anneaux concentriques formant le réseau. Ce réseau peut être formé d'anneaux circulaires, ou légèrement déformés pour éclairer préférentiellement les zones des index holographiques lorsque l'aiguille est disposée entre deux hologrammes.

Avantageusement, le ou les réseaux diffractifs sont des réseaux dits en échelettes (blazed gratings) ou des réseaux holographiques maximisant la lumière réfractée selon un angle prédéterminé (i.e. la proportion de lumière dans le mode de réfraction induisant l'angle de réfraction désiré est maximisée).

A l'instar des hologrammes, les réseaux diffractifs sont de préférence disposés sur la surface interne de la glace de montre et sont formés par des reliefs tridimensionnels pouvant être moulés, gravé emboutis,...

Dans le mode le plus élaboré de l'invention, plusieurs aiguilles de diamètres différents éclairent des réseaux diffractifs distincts éclairant des hologrammes correspondants par exemple à des heures et des minutes (voir des secondes).

Plutôt que de séparer spatialement les hologrammes correspondants aux différentes aiguilles, une alternative avantageuse est d'utiliser des longueurs d'ondes différentes au niveau des sources des différentes aiguilles. Dans ce cas, les heures, les minutes (et éventuellement les secondes) apparaîtront non seulement selon une couleur différente, mais aussi sous une taille différente, la taille de l'image reconstruite étant fonction de la longueur d'onde.

## Revendications

1. Dispositif d'affichage holographique intégré à un dispositif horloger comprenant au moins une aiguille mobile (1, 2, 101), comprenant à son extrémité périphérique une source lumineuse (3, 4, 103) et une glace de montre (5), **caractérisé en ce que** ladite glace de montre comprend à sa périphérie au moins un hologramme (8, 9, 108, 209), ladite source lumineuse (3, 4, 103) étant agencée sur l'aiguille (1, 2, 101) de façon à éclairer par l'arrière ledit au moins un hologramme (8, 9, 108, 209) disposé sur une face interne de ladite glace de montre de façon à reconstruire ledit hologramme (8, 9, 108) lorsqu'elle passe dans un secteur angulaire prédéterminé de la glace.

2. Dispositif d'affichage selon la revendication 1 dans lequel une pluralité d'hologrammes (8, 9, 108) est disposée sur au moins une circonférence (214) de ladite glace, les hologrammes (8, 9, 108, 209) étant reconstruits successivement lors du passage de l'aiguille dans le secteur angulaire correspondant.

3. Dispositif d'affichage selon la revendication 2 dans lequel le dispositif horloger comprend une première et une deuxième aiguille (1, 2), une source lumineuse étant disposée sur chaque aiguille, et la pluralité d'hologrammes étant disposée sur une première et une deuxième circonférence de ladite glace de façon à ce que les hologrammes disposés sur la première circonférence soient successivement reconstruits par l'éclairage de la première aiguille, et les hologrammes disposés sur la deuxième circonférence soient successivement reconstruits par l'éclairage de la deuxième aiguille.

4. Dispositif d'affichage selon la revendication 1 dans lequel la glace comprend au moins un réseau diffractif (6, 7), agencé à la surface interne de ladite glace de façon à diffracter la lumière selon un angle supérieur à l'angle critique de réflexion totale, ledit au moins un hologramme étant disposé sur la glace (5) de façon à être reconstruit par le faisceau diffracté (11), de préférence après une réflexion totale à la surface externe de la glace (5).

5. Dispositif d'affichage selon la revendication 4 dans lequel le réseau diffractif est un réseau du type échelette (blazed grating) ou holographique.

6. Dispositif selon la revendication 4 ou 5 dans lequel une pluralité de réseaux diffractifs (215) sont disposés sur au moins une première circonférence (216) et une pluralité d'hologrammes (209) sont disposés sur une seconde circonférence (214) de ladite glace, la source lumineuse à l'extrémité périphérique de l'aiguille (1, 2) étant disposée de façon à éclairer successivement, en utilisation, les réseaux diffractifs de la première circonférence, et la lumière diffractée reconstruisant successivement les hologrammes correspondants sur la seconde circonférence.

7. Dispositif selon la revendication 6 comprenant une seconde aiguille comprenant une seconde source lumineuse disposée de façon à éclairer successivement, en utilisation, une pluralité de réseaux diffractifs disposés sur une troisième circonférence de ladite glace, la lumière diffractée reconstruisant successivement une pluralité d'hologrammes disposés sur une quatrième circonférence.

8. Dispositif selon l'une quelconque des revendications précédentes dans lequel la, ou les source/s lumineuse/s comprend/ennent une source primaire sélectionnée parmi le groupe consistant en diode à émission lumineuse (DEL), diode laser, et diode laser à cavité verticale.

9. Dispositif selon la revendication 8 dans lequel la source lumineuse est monochromatique.

10. Dispositif selon l'une des revendications précédentes dans lequel la, ou les source/s lumineuse/s comprend/ennent un guide d'onde logé dans l'aiguille.

11. Dispositif selon l'une quelconque des revendications précédentes dans lequel l'hologramme comprend une structure tridimensionnelle, gravée, estampée, gauffrée ou moulée à la surface interne de la glace (5).

## Patentansprüche

1. Holographische Anzeigevorrichtung, die in einer Uhrenvorrichtung aufgenommen ist, die mindestens einen beweglichen Zeiger (1, 2, 101), der an seinem äußeren Ende eine Lichtquelle (3, 4, 103) aufweist, und ein Uhrenglas (5) umfasst,
**dadurch gekennzeichnet, dass** das Uhrenglas an seinem Rand mindestens ein Hologramm (8, 9, 108, 209) aufweist, wobei die Lichtquelle (3, 4, 103) an dem Zeiger (1, 2, 101) so angeordnet ist, dass sie das mindestens eine Hologramm (8, 9, 108, 209), das an einer Innenfläche des Uhrenglases angeordnet ist, von hinten beleuchtet, derart, dass das Hologramm (8, 9, 108, 209) rekonstruiert wird, wenn sie sich in einem vorgegebenen Winkelsektor des Glases bewegt.

2. Anzeigevorrichtung nach Anspruch 1, wobei mehrere Hologramme (8, 9, 108) auf mindestens einem Umkreis (214) des Glases angeordnet sind, wobei die Hologramme (8, 9, 108, 209) nacheinander rekonstruiert werden, während der Zeiger den entsprechenden Winkelsektor durchläuft.

3. Anzeigevorrichtung nach Anspruch 2, wobei die Uhrenvorrichtung einen ersten und einen zweiten Zeiger (1, 2) umfasst, wobei an jedem Zeiger eine Lichtquelle angeordnet ist und die mehreren Hologramme auf einem ersten und auf einem zweiten Umkreis des Glases so angeordnet sind, dass die Hologramme, die auf dem ersten Umkreis angeordnet sind, durch die Beleuchtung des ersten Zeigers nacheinander rekonstruiert werden und die Hologramme, die auf dem zweiten Umkreis angeordnet sind, durch die Beleuchtung des zweiten Zeigers nacheinander rekonstruiert werden.

4. Anzeigevorrichtung nach Anspruch 1, wobei das Glas mindestens ein Beugungsgitter (6, 7) umfasst, das an der Innenfläche des Glases derart angeordnet ist, dass das Licht unter einem Winkel größer als der kritische Winkel der Totalreflexion gebeugt wird, wobei das mindestens eine Hologramm auf dem Glas (5) so angeordnet ist, dass es durch das gebeugte Strahlenbündel (11) vorzugsweise nach einer Totalreflexion an der Oberfläche des Glases (5) rekonstruiert wird.

5. Anzeigevorrichtung nach Anspruch 4, wobei das Beugungsgitter ein sprossenartiges Gitter ("blazed grating") oder ein holographisches Gitter ist.

6. Vorrichtung nach Anspruch 4 oder 5, wobei mehrere Beugungsgitter (215) mindestens auf einem ersten Umkreis (216) angeordnet sind und mehrere Hologramme (209) auf einem zweiten Umkreis (214) des Glases angeordnet sind, wobei die Lichtquelle an dem äußeren Ende des Zeigers (1, 2) derart angeordnet ist, dass sie im Gebrauch nacheinander die Beugungsgitter des ersten Umkreises beleuchtet, und das gebeugte Licht nacheinander die entsprechenden Hologramme auf dem zweiten Umkreis rekonstruiert.

7. Vorrichtung nach Anspruch 6 mit einem zweiten Zeiger, der eine zweite Lichtquelle aufweist, die so angeordnet ist, dass im Gebrauch nacheinander mehrere auf einem dritten Umkreis des Glases angeordnete Beugungsgitter beleuchtet werden, wobei das gebeugte Licht nacheinander mehrere auf einem vierten Umkreis angeordnete Hologramme rekonstruiert.

8. Vorrichtung nach einem der vorhergehenden Ansprüche, wobei die Lichtquelle/n eine primäre Quelle umfasst/umfassen, die ausgewählt ist aus der Gruppe bestehend aus einer Leuchtdiode (DEL), einer Laserdiode und einer Laserdiode mit vertikalem Hohlraum.

9. Vorrichtung nach Anspruch 8, wobei die Lichtquelle monochromatisch ist.

10. Vorrichtung nach einem der vorhergehenden Ansprüche, wobei die Lichtquelle/n einen Wellenleiter umfasst/umfassen, der in dem Zeiger aufgenommen ist.

11. Vorrichtung nach einem der vorhergehenden Ansprüche, wobei das Hologramm eine dreidimensionale Struktur aufweist, die auf der Innenfläche des Glases (5) eingraviert, gehämmert, geprägt oder geformt ist.

## Claims

1. Holographic display device incorporated in a timepiece device comprising at least one movable hand (1, 2, 101), having a light source (3, 4, 103) at its peripheral end, and a watch glass (5), **characterised in that** said watch glass comprises at least one hologram (8, 9, 108, 209) at its periphery, said light source (3, 4, 103) being arranged on the hand (1, 2, 101) so that it illuminates from the rear said at least one hologram (8, 9, 108, 209) disposed on an internal face of said watch glass so as to reconstruct said hologram (8, 9, 108) when the hand moves into a predetermined angular sector of the glass.

2. Display device according to claim 1 wherein a plurality of holograms (8, 9, 108) are disposed on at least one circumference (214) of said glass, the holograms (8, 9, 108, 209) being successively reconstructed when the hand moves into the corresponding angular sector.

3. Display device according to claim 2, wherein the timepiece device includes a first and a second hand (1, 2), one light source being disposed on each hand, and the plurality of holograms being disposed on a first and a second circumference of said glass so that the holograms disposed on the first circumference are reconstructed in succession by the light from the first hand, and the holograms disposed on the second circumference are reconstructed in succession by the light from the second hand.

4. Display device according to claim 1, wherein the glass includes at least one diffraction grating (6, 7), arranged on the internal surface of said glass to diffract light at an angle greater than the critical angle of total reflection, said at least one hologram being disposed on the glass (5) in order to be reconstructed by the diffracted beam (11), preferably after total reflection at the external surface of the glass (5).

5. Display device according to claim 4, wherein the diffraction grating is a blazed or holographic grating.

6. Device according to claim 4 or 5, wherein a plurality of diffraction gratings (215) are disposed on at least a first circumference (216) and a plurality of holograms (209) are disposed on a second circumference (214) of said glass, the light source at the peripheral end of the hand (1, 2) being arranged to successively illuminate, during use, the diffraction gratings of the first circumference, and the diffracted light successively reconstructing the corresponding holograms on the second circumference.

7. Device according to claim 6 comprising a second hand including a second light source arranged to illuminate in succession, during use, a plurality of diffraction gratings disposed on a third circumference of said glass, wherein the diffracted light successively reconstructs a plurality of holograms disposed on a fourth circumference.

8. Device according to any of the preceding claims, wherein the one or more light sources include a primary source selected from the group consisting of a light-emitting diode (LED), laser diode and vertical-cavity laser diode.

9. Device according to claim 8, wherein the light source is monochromatic.

10. Device according to any of the preceding claims, wherein the one or more light sources include a waveguide housed inside the hand.

11. Device according to any of the preceding claims wherein the hologram includes a three-dimensional structure, etched, stamped, embossed or moulded on the internal surface of the glass (5).
